# EUROPEAN PATENT SPECIFICATION

(11) **EP 3 242 503 B1**
(45) Date of publication and mention of the grant of the patent: **31.10.2018**
(21) Application number: 16168262.0
(22) Date of filing: 04.05.2016
(51) Int. Cl.: H04W 16/14

(54) **METHOD AND NODE FOR OPERATING TWO COMMUNICATION SYSTEMS**
VERFAHREN UND KNOTEN ZUM BETRIEB VON ZWEI KOMMUNIKATIONSSYSTEMEN
PROCÉDÉ ET NOEUD PERMETTANT DE FAIRE FONCTIONNER DEUX SYSTÈMES DE COMMUNICATION

(43) Date of publication of application: 08.11.2017
(60) Divisional application: 17155544.4
(73) Proprietor: Kapsch CarrierCom AG, 1120 Wien (AT)
(72) Inventor: JACQUES, Roger, 78320 Lévis Saint Nom (FR); BOTET, Gil, 78180 Montigny-Le-Bretonneux (FR); GRUET, Christophe, 78180 Montigny le Bretonneux (FR)
(74) Representative: Weiser, Andreas

(56) References cited:
- WO-A1-2010/091713
- WO-A2-2015/036751
- KAPSCH CARRIERCOM FRANCE S A S: "Elements for assessing impact of ER-GSM systems introduction", 3GPP DRAFT; GP-130098 ELEMENTS FOR ASSESSING IMPACT OF ER-GSM SYSTEMS INTRODUCTION, 3RD GENERATION PARTNERSHIP PROJECT (3GPP), MOBILE COMPETENCE CENTRE ; 650, ROUTE DES LUCIOLES ; F-06921 SOPHIA-ANTIP , vol. TSG GERAN, no. Vienna, Austria; 20130226 - 20130228 20 February 2013 (2013-02-20), XP050696087, Retrieved from the Internet: URL:http://www.3gpp.org/ftp/tsg_geran/TSG_ GERAN/GERAN_57_Vienna/Docs/ [retrieved on 2013-02-20]

## Description

The present invention relates to a method for operating a first and a second communication system, having a first and a second frequency band, respectively, to be used for communication between a user terminal and a node of a cellular network, wherein the first communication system has at least two narrowband channels, which are distributed with a mutual spacing over the first frequency band, according to claim 1. The invention further relates to a node of a cellular network for communication with the user terminal, according to claim 10.

The communication between trains and a stationary network is traditionally performed according to the GSM-R standard, which typically has a frequency band of 4 MHz. Naturally, it is an aim of the network operator to upgrade his network to newer wideband standards such as LTE. However, since GSM-R is widely deployed in nearly all railway-based networks and thus proven as a reliable and proven communication standard for such networks, a simple replacement of GSM-R by LTE is not desirable. However, the network operator cannot simply acquire more bandwidth to run both communication systems in a parallel manner due to monetary and availability issues. Known dual communication systems, on the other hand, require the use of separate frequency bands taking up a lot of resources and are thus not applicable to railway-based networks.

The document Kapsch CarrierCom France SAS: "Elements for assessing impact of ER-GSM systems introduction", 3GPP Draft; GP-130098 Elements for Assessing Impact of ER-GSM Systems Introduction, describes the impact of a DL GSM-R system on the close UL band devoted to public operations managing GSM, UMTS or LTE systems.

WO 2015/36751 A1 shows that IoT (Internet of Things) network resources can be utilised in unused bandwidth in a GSM or LTE communication system.

WO 2010/091713 shows a GERAN and LTE radio resource management that shares the same spectrum allocation. LTE utilizes information from GSM in the shared frequency area and avoids allocation of the occupied resource blocks.

However, because common synchronisation channels sometimes occupy more contiguous channel resources than can fit into a spacing between two narrowband channels, these methods cannot always be performed.

It is a goal of the present invention to overcome the drawbacks of the state of the art.

To this end, in a first aspect the invention provides for a method for operating a first and a second communication system, having a first and a second predetermined frequency band, respectively, to be used for communication between a user terminal and a node of a cellular network,
wherein the first communication system has at least two narrowband channels, which are distributed with a mutual spacing over the first frequency band, and
wherein the second communication system has a set of channel resources, which are distributed contiguously over the second frequency band,
wherein the first and the second frequency band overlap,
wherein communication over the second communication system is performed only in those channel resources that do not overlap with the narrowband channels of the first communication system, and
wherein one of the channel resources of the second communication system that does not overlap with the narrowband channels of the first communication system is configured in an NB-LTE mode.

The invention exploits the fact that narrowband channels, also called frequency carriers, of narrowband systems such as GSM-R have gaps (spacings) between them, in which channel resources of the second communication system, e.g., a broadband system, can be employed. The method of the invention thus uses previously unused frequency bands of the first communication system to create a denser dual communication system. In this way, two communication systems can be co-located on a single frequency band, so that both systems together can use the full bandwidth.

Since such common synchronisation channels sometimes occupy more contiguous channel resources than can fit into a spacing between two narrowband channels of the first communication system, the above-mentioned method can not always be performed. To overcome this issue, one of the channel resources of the second communication system that does not overlap with the narrowband channels of the first communication system is configured in an NB-LTE (narrowband-LTE) mode. Thus one channel resource is selected, on which a common synchronisation channel is centralized. This specific channel resource is used by the user terminal to discover, synchronize, and request access to the LTE solution of the invention.

Preferably, the first communication system is operated according to the GSM-R (Global System for Mobile Communications - Rail) standard while the second communication system is operated according to the LTE (Long Term Evolution) standard. While the usage of other communication standards with the invention is also feasible, the combination of GSM-R and LTE is especially advantageous since in GSM-R only very few narrowband channels are employed to maintain reception quality and reliability. The channel resources of LTE, the so called resource blocks, are fine enough to be located between the narrowband channels of GSM-R, thus yielding an effective combination of the two communication systems.

It is especially preferred if the bandwidth of the first frequency band is substantially 4 MHz and the bandwidth of the second frequency band is substantially 5 MHz, wherein the first frequency band lies within the second frequency band. By means of this, already existing frequency bands of GSM-R can be continued to be used (legacy GSM-R) and can be enhanced with LTE. No new frequency bands have to be acquired by the system operator. Furthermore, it is preferred if only those channel resources of the second communication system are used that lie completely within the first frequency band. In this way, a previously existing first frequency band does not have to be extended. Thereby, the 5 MHz frequency band of LTE is easily adapted to the frequency band of GSM-R according to the invention.

Advantageously, the overlap of the frequency bands is chosen, if possible, in such a way that the number of channel resources of the second communication system that overlap with the narrowband channels of the first communication system is minimized. This can be achieved by appropriately choosing the first or preferably the second predetermined frequency band in frequency. Thereby, the amount of channel resources that are overlapped by a single narrowband channel can be reduced, for example from three to two. In the preferred embodiment of bandwidths of 4 MHz and 5 MHz for the two frequency bands, the amount of available resources can be increased from twelve to thirteen.

Further advantageously, the overlap of the first communication system and the second communication system is chosen such that channel resources that are used as common channel resources for synchronisation in the second communication system fall into a single spacing of the first communication system. In LTE, for example, common synchronisation channels, namely the primary and secondary synchronisation channels P-SCH and S-SCH, occupy generally central and contiguous resource blocks of the frequency band. By mapping these channel resources into a single spacing between the narrowband channels of the first communication system, synchronisation between the user terminal and the nodes of the cellular network can be maintained.

To facilitate the above-mentioned method, a list of the channel resources that do or do not overlap with the narrowband channels of the first communication system are made available to the user terminal to build a subset of available channel resources. Thus, the user terminal knows which channel resources of the second communication system are available for communication, without the need of contiguous channel resources.

Preferably, the channel resources of the second communication system that do not overlap with the narrowband channels of the first communication system are reconfigured as an LTE system with virtually contiguous channel resources. In one embodiment, the number of available resource channels is reduced to a maximum number allowed by the applicable standard. In other embodiments, especially for LTE, uplink and downlink asymmetries can be exploited to freely select any number of channel resources from 6 to 110 for the virtual set of contiguous channel resources. The renumbered contiguous channel resources can then be used to communicate over this "virtualized" second communication system without altering the structure of higher communication layers based thereupon.

To reduce interferences caused by active channel resources of the second communication system for the narrowband channels of the first communication system, the number of uplink allocation grants in channel resources adjacent to active narrowband channels of the first communication system is minimized by the node. This serves to protect the quality of GSM-R communications. To this end, received signal strengths in channel resources adjacent to narrowband channels can be measured and evaluated to determine a timing of activity in the narrowband channels.

To further reduce interferences caused by higher power uplink transmissions, user terminals using channel resources for uplink with a strong power level are allocated channel resources far away from active narrowband channels of the first communication system by the node. Again, this serves to protect the quality of GSM-R communications.

It is further preferred that an Enhanced Physical Downlink Control Channel (ePDCCH) and Demodulation Reference Symbols (DM-RS) are employed instead of the Physical Downlink Control Channel (PDCCH) and regular Reference Symbols (RS) used in LTE systems. Thus, the downlink throughput offered to a user is increased.

In a second aspect, the invention provides for a node of a cellular network for communication with a user terminal by means of a first and a second communication system, which have a first and a second predetermined frequency band, respectively,
wherein the first communication system has at least two narrowband channels, which are distributed with a mutual spacing over the first frequency band, and
wherein the second communication system has a set of channel resources, which are distributed contiguously over the second frequency band,
wherein the first and the second frequency band overlap, and
wherein the node is configured to communicate over the second communication system only in those channel resources that do not overlap with the narrowband channels of the first communication system, and
wherein one of the channel resources of the second communication system that does not overlap with the narrowband channels of the first communication system is configured in an NB-LTE (narrowband-LTE) mode.

The node is thus able to perform communication with user terminals over both communication systems, which means that the two communication systems are co-located on the same node to increase the performance of the combined communication system.

All embodiments of the method of the invention and their corresponding advantages are also applicable for the node of the invention.

The invention shall now be explained in more detail below on the basis of preferred exemplary embodiments thereof with reference to the accompanying drawings, in which:
Fig. 1 shows a linear cellular network with nodes according to the invention;
Fig. 2 shows a first frequency band with narrowband channels of a first communication system;
Fig. 3 shows a second frequency band with contiguous channel resources of a second communication system;
Fig. 4 shows a co-location of the communication systems of Figs. 2 and 3 performed according to the invention; and
Fig. 5 schematically shows an embodiment of the method of the invention to create virtually contiguous channel resources.

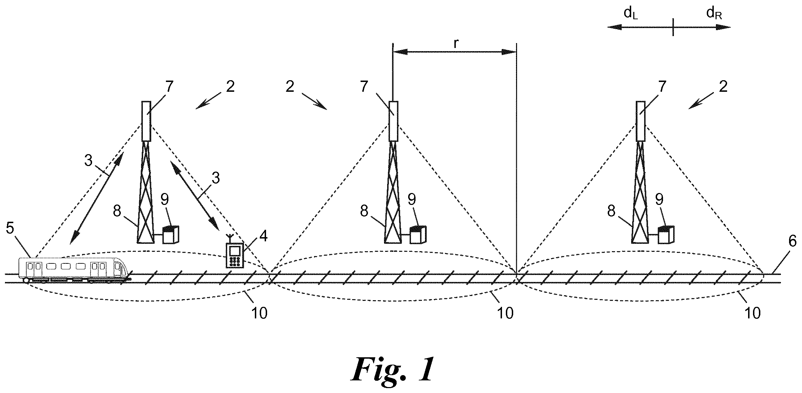

Fig. 1 shows a cellular network 1 with a one-dimensional ("linear") cell topology. In this type of network, nodes 2 communicate data 3 with user terminals 4, which only travel in one direction d_{L} or the corresponding opposite direction d_{R}, e.g., by riding on a train 5 on a railway track 6, driving by car on a highway or in a tunnel, et cet.

With further reference to Fig. 1, each node 2 has an omnidirectional antenna 7 mounted on a support 8 and controlled by a transceiver 9. Omnidirectional antennas 7 - or multiple antennas 7 broadcasting the same content - communicate data 3 in both directions d_{L}, d_{R} of the node 2, i.e., it does not matter if a user terminal 4 is located to the left or to the right of a node 2 to establish communication. Each antenna 7 thus exhibits a coverage area 10 with a range r. Other antennas are also feasible, for example such antennas that communicate data independently to the left and to the right side d_{L}, d_{R}. Such antennas are disclosed, e.g., in the earlier filed, un-published European patent application No. 16 166 025.3.

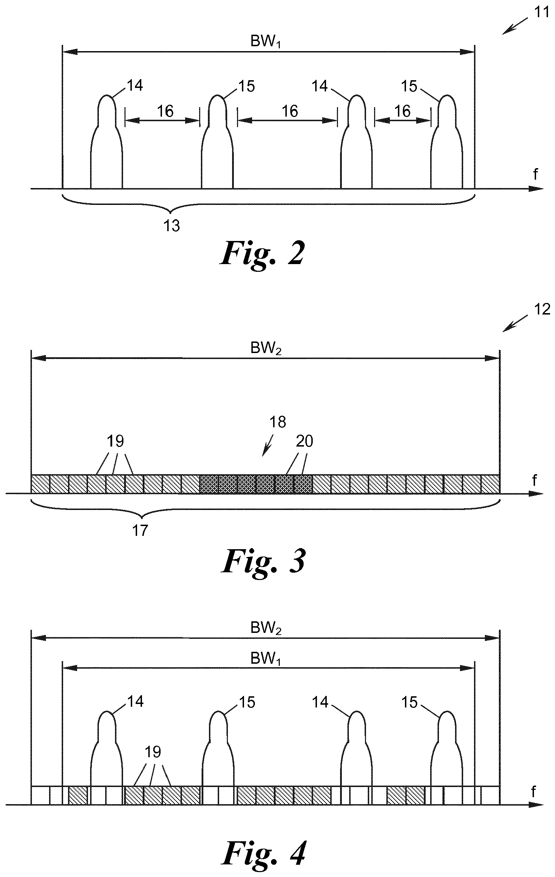

The nodes 2 and user terminals 4 can communicate data 3 by means of two separate communication systems 11 (Fig. 2) and 12 (Fig. 3) according to two different standards, the first communication system being a narrowband system such as GSM or GSM-R and the second communication system being a broadband, wideband or ultra-wideband system such as 3GPP LTE/LTE-A or IEEE WiMAX 802.17e. In the embodiment described below, the first communication system 11 is operated according to the GSM-R standard and the second communication system 12 is operated according to the LTE standard. To this end, each node 2 can comprise two antennas 7, transceivers 9, and even supports 8. The individual parts of such a "distributed" or "split" node 2 can even be spaced from each other as long as the coverage areas 10 of their antennas 7 overlap at least partially. In most embodiments, however, the antennas 7 for the two communication systems 11, 12 are co-located so that the coverage areas 10 are also co-located as far as possible.

Fig. 2 shows an embodiment of the first communication system 11 according to the GSM-R standard and having a first frequency band 13 with a bandwidth BW₁ of 4 MHz. According to GSM-R, one frequency band 13 is used for downlink in the frequency range of 921 MHz to 925 MHz and one frequency band 13 is used for uplink in the frequency range of 876 MHz to 880 MHz. The embodiments described below hold for both the uplink and the downlink frequency band 13.

For the present GSM-R system, two narrowband channels 14 per node 2 are considered. A user terminal 4 communicates data 3, for example voice communication, by means of timeslots assigned on one of these two carriers 14 with a first node 2 when it is in the coverage area 10 of this first node 2. To avoid interferences from the first node 2, the user terminal 4 communicates data 3 over two different narrowband channels 15 with a second, neighbouring node 2 once it enters the coverage area 10 of this second node 2. A third node 2 would then again employ the narrowband channels 14 of the first node 2 since interferences of the first node 2 have fallen off sufficiently due to the large distance between the first and the third node 2. Such a third node 2 could, however, also use narrowband channels different from those used by the two nodes 2 before to further reduce interferences.

It is furthermore understood that there can also be only one or more than two narrowband channels 14, 15 per node 2. The narrowband channels 14, 15 are distributed with mutual spacings or gaps 16 on the first frequency band 13. The minimum usage spacings 16 are usually 400 or 600 kHz wide, while the narrowband channels have a width of approximately 200 kHz.

Fig. 3 shows an embodiment of the second communication system 12 having a second frequency band 17 with a bandwidth BW₂ of 5 MHz. The second communication system 12 has a set 18 of channel resources 19 which are distributed contiguously over the frequency band 17. If the second communication system 12 is operated according to the LTE standard, then these channel resources 19 are called resource blocks and are each 180 kHz wide, yielding 25 resource blocks 19 for a bandwidth of 5 MHz. Generally, the LTE standard allows standardized total bandwidths BW₂ of 1.4 MHz, 3 MHz, 5 MHz, 10 MHz, and 20 MHz, which corresponds to 6 to 110 contiguous resource blocks 19.

In some embodiments of LTE, the downlink and uplink channel structures for the LTE are separated in frequency, such that there is one frequency band 17 for downlink and one frequency band 17 for uplink. In this case, the downlink frequency band 17 of the communication system 12 can overlap with the downlink frequency band 13 of the GSM-R communication system 11, and the uplink frequency band 17 of the communication system 12 can overlap with the uplink frequency band 13 of the GSM-R communication system 11. However, in other embodiments of LTE, time division multiplexing is used for both uplink and downlink channels in either frequency band 17, so that mixed channel structures are also possible.

LTE systems such as the system 12 usually employ common synchronisation channels 20 for synchronisation between the user terminals 4 and the nodes 2, which usually take up six central, contiguous resource blocks 19 (shown in Fig. 3 in dark grey) for the downlink frequency band 17. The uplink frequency band 17 usually does not have a dedicated synchronisation signal and is in most cases synchronised by means of the downlink signal.

To allow a single node 2 to communicate with user terminals 4 capable of communicating only according to either GSM-R or LTE, or with a user terminal 4 capable of communicating in both standards simultaneously or successively, the following measures are taken.

According to Fig. 4, a first (e.g., GSM-R) frequency band 13 and a second (e.g., LTE) frequency band 17 are overlapped in such a way that the first frequency band 13 is completely contained within the second frequency band 17. However, partially overlapping frequency bands 13, 17 are also feasible.

To make communication over both communications systems 11, 12 possible, communication over the second communication system 12 is only performed in those of its channel resources 19 that do not overlap with the narrowband channels 14, 15 of the first communication system 11. Since sometimes only the bandwidth BW₁ of the first communication system 11 is available to the operator, communication over the second communication system 12 can furthermore only be performed in those channel resources 19 that lie completely within the first frequency band 13. This results in a pattern of channel resources 19 that are "blanked out" for communication, as shown in Fig. 4 in white, or available for communication, as shown in Fig. 4 in light grey.

Fig. 4 further shows that a narrowband channel 14, 15 either occupies two or three channel resources 19. Therefore, the overlap of the frequency bands 13, 17 is chosen, if possible, in such a way that the number of channel resources 19 of the second communication system 12 that overlap with the narrowband channels 14, 15 of the first communication system 11 is minimized. Given bandwidths BW₁, BW₂ of the communication systems 11, 12, of 4 MHz and 5 MHz, respectively, this yields either twelve or thirteen channel resources 19 available for communication.

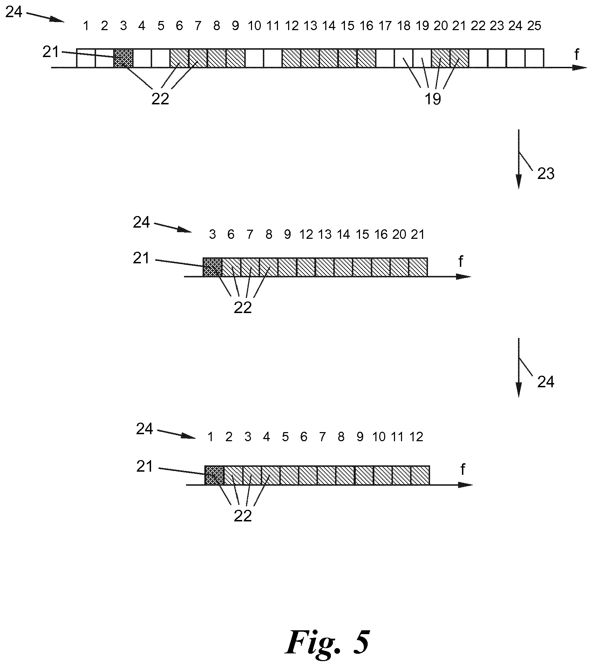

Depending on the bandwidths BW₁, BW₂ of the communication systems 11, 12, all six of the contiguous common synchronisation channels 20 for, e.g., an LTE frequency band 17 may be available for communication. In the example of Fig. 4, however, only five central, contiguous channel resources 19 are available for communication, so that conventional LTE common synchronisation channels can not be hosted. For such a scenario, a different method for synchronisation between the user terminals 4 and the nodes 2 is provided, which is now described by means of Fig. 5.

Fig. 5 shows in its topmost diagram twenty-five channel resources 19 of a second communication system 12, wherein channel resources 19 that are available for communication are depicted in light grey and channel resources 19 that are not available for communication are blank (white). One of the channel resources 19 of the second communication system 12 that is available for communication, i.e., that does not overlap with narrowband channels 14, 15 of the first communication system 11, is configured in an NB-LTE (narrowband-LTE) mode, depicted in dark grey and designated with "21".

Through the configuration of a channel resource 19 in the NB-LTE mode, the downlink and uplink synchronisation channels can be centralized on only one channel resource 21. This specific channel resource 21 is used by the user terminal 4 to discover, synchronize, and request access to the LTE solution proposed herein. Furthermore, information about the other channel resources 19 available for communication is made available to the user terminal 4 via this NB-LTE channel resource 21. This information contains, e.g., a list of the channel resources 19 that do or do not overlap with the narrowband channels 14, 15 of the first communication system 11, in order to build a subset of available channel resources 22. Additionally, the bandwidth configuration of the second communication system 12, i.e., in this case the bandwidth BW₂ of 5 MHz, and the rank (numbering) of the channel resource 21 that is configured in the NB-LTE mode, in this case the rank "3", are made available to the user terminal 4.

Step 23 shows the reconfiguration of the channel resources 22 available for communication as an LTE system with virtually contiguous channel resources. Additionally, in a step 24, a rank 25 of the channel resources 22 available for communication, i.e., of the virtually contiguous channel resources, can be adapted such that the channel resources have steadily increasing ranks. Fig. 5 shows that the channel resource 21 that is configured in the NB-LTE mode is now the first channel resource of the reconfigured "virtual" LTE system. However, the channel resource 21 configured in the NB-LTE mode can alternatively be any of the channel resources 22 available for communication.

It can be seen that the new virtually contiguous LTE system has a structure of twelve or thirteen channel resources (resource blocks) 19, which may not be allowed according to conventional LTE standards, which are standardized for 6, 15, 25, 50, 75, or 100 resource blocks. One option would be to blank out even more channel resources 19 to reach a number of available channel resources 22 permitted by LTE. A different option is to simply circumvent this constraint by allocating the uplink and downlink bands 17 asymmetrically, i.e., not strictly according to an LTE standard. This can be done announcing the new, modified number of channel resources to the user terminal, e.g., via modified RRC (Radio Resource Control) SysInfo messages of the LTE standard.

Furthermore, as an optional refinement, certain control channels of LTE, which usually span the full system bandwidth BW₂, can be replaced by enhanced control channels that only span a small portion of the bandwidth BW₂. Specifically, the Physical Downlink Control Channel (PDCCH) and so-called Reference Symbols (RS) can be removed from the channel resources 19 and are replaced by an Enhanced Physical Downlink Control Channel (ePDCCH) and so-called Demodulation Reference Symbols (DM-RS), which are used for demodulation of the ePDCCH. This increases the downlink throughput offered to user terminals 4.

As mentioned above, it is important to minimize interferences between channels. To this end, firstly, the number of LTE uplink allocation grants in channel resources 19 of an LTE uplink frequency band 17 which are adjacent to active narrowband channels 14 of the first communication system 11 can be minimized by the node 2. LTE uplink allocation grants can, e.g., be allocated to channel resources 19 adjacent to non-active narrowband channels 15. Secondly, since user terminals 4 may transmit LTE data adaptively at different power levels, user terminals 4 using LTE channel resources 19 for uplink with a strong power level can be allocated channel resources 19 far away from active narrowband channels 14 of the GSM-R communication system 11 by the node 2, for example next to non-active narrowband channels 15.

Similarly, GSM-R uplink power levels can also be controlled. For example, if a node 2 receives data 5 from a user terminal 4 over a narrowband channel 14 at a power level that is higher than a threshold, the node 2 can order the user terminal 4 to reduce its transmission power level for this specific narrow band channel 14 to minimize interferences with channel resources 19 in the spacings 16.

The invention is thus not restricted to the specific embodiments described in detail herein but encompasses all variants, combinations, and modifications thereof that fall within the framework of the appended claims.

## Claims

1. Method for operating a first and a second communication system, having a first and a second predetermined frequency band (13, 17), respectively, to be used for communication between a user terminal (4) and a node (2) of a cellular network (1),
wherein the first communication system (11) has at least two narrowband channels (14, 15), which are distributed with a mutual spacing (16) over the first frequency band (13), and
wherein the second communication system (12) has a set (18) of channel resources (19), which are distributed contiguously over the second frequency band (17),
wherein the first and the second frequency band (13, 17) overlap, and
wherein communication over the second communication system (12) is performed only in those channel resources (19) that do not overlap with the narrowband channels (14, 15) of the first communication system (11),
**characterized in that** one of the channel resources (19) of the second communication system (12) that does not overlap with the narrowband channels (14, 15) of the first communication system (11) is configured in a narrowband-LTE mode.

2. Method according to claim 1, **characterized in that** the first communication system (11) is operated according to the GSM-R standard while the second communication system (12) is operated according to the LTE standard.

3. Method according to claim 1 or 2, **characterized in that** the bandwidth (BW₁) of the first frequency band (13) is 4 MHz and the bandwidth (BW₂) of the second frequency band (17) is 5 MHz, wherein the first frequency band (13) lies within the second frequency band (17).

4. Method according to any one of the claims 1 to 3, **characterized in that** the overlap of the frequency bands (13, 17) is chosen in such a way that the number of channel resources (19) of the second communication system (12) that overlap with the narrowband channels (14, 15) of the first communication system (11) is minimized by choosing the first or preferably the second predetermined frequency band (13, 17) in frequency.

5. Method according to any one of the claims 1 to 4, **characterized in that** a list of the channel resources (19) that do or do not overlap with the narrowband channels (14, 15) of the first communication system (11) are made available to the user terminal (4) to build a subset of available channel resources (19).

6. Method according to any one of the claims 1 to 5, **characterized in that** the channel resources (19) of the second communication system (12) that do not overlap with the narrowband channels (14, 15) of the first communication system (11) are reconfigured as an LTE system with virtually contiguous channel resources (19).

7. Method according to any one of the claims 1 to 6, **characterized in that** the number of uplink allocation grants in channel resources (19) adjacent to active narrowband channels (14) of the first communication system (11) is minimized by the node.

8. Method according to any one of the claims 1 to 7, **characterized in that** user terminals (4) using channel resources (19) for uplink with a strong power level are allocated channel resources (19) away from active narrowband channels (14) of the first communication system (11) by the node (2).

9. Method according to any one of the claims 1 to 8 in combination with claim 2, **characterized in that** an Enhanced Physical Downlink Control Channel (EPDCCH) and Demodulation Reference Symbols (DM-RS) are employed instead of the Physical Downlink Control Channel (PDCCH) and regular Reference Symbols (RS) of the LTE system.

10. Node of a cellular network adapted for communication with a user terminal (4) by means of a first and a second communication system (11, 12), which have a first and a second predetermined frequency band (13, 17), respectively,
wherein the first communication system (11) has at least two narrowband channels (14, 15), which are distributed with a mutual spacing (16) over the first frequency band (13), and
wherein the second communication system (12) has a set (18) of channel resources (19), which are distributed contiguously over the second frequency band (17),
wherein the first and the second frequency band (13, 17) overlap, and
wherein the node (2) is configured to communicate over the second communication system only in those channel resources (19) that do not overlap with the narrowband channels (14, 15) of the first communication system (11),
**characterized in that** one of those channel resources (19) of the second communication system (12) that does not overlap with the narrowband channels (14, 15) of the first communication system (11) is configured in a narrowband-LTE mode.

11. Node according to claim 10, **characterized in that** the first communication system (11) is a system according to the GSM-R standard while the second communication system (12) is a system according to the LTE standard.

12. Node according to claim 10 or 11, **characterized in that** the bandwidth (BW₁) of the first frequency band (13) is 4 MHz and the bandwidth (BW₂) of the second frequency band (17) is 5 MHz, wherein the first frequency band (13) lies within the second frequency band (17).

13. Node according to any one of the claims 10 to 12, **characterized in that** the overlap of the frequency bands (13, 17) is such that the number of channel resources (19) of the second communication system (12) that overlap with the narrowband channels (14, 15) of the first communication system (11) is minimized by choosing the first or preferably the second predetermined frequency band (13, 17) in frequency.

## Patentansprüche

1. Verfahren zum Betreiben eines ersten und eines zweiten Kommunikationssystems, welche jeweils ein vorgegebenes erstes bzw. zweites Frequenzband (13, 17) haben, zur Verwendung für die Kommunikation zwischen einem Benutzerterminal (4) und einem Knoten (2) eines zellularen Netzwerks (1),
wobei das erste Kommunikationssystem (11) zumindest zwei Schmalbandkanäle (14, 15) hat, die mit gegenseitigem Abstand (16) über das erste Frequenzband (13) verteilt sind, und
wobei das zweite Kommunikationssystem (12) einen Satz (18) von Kanalressourcen (19) hat, die aneinander angrenzend über das zweite Frequenzband (17) verteilt sind,
wobei das erste und das zweite Frequenzband (13, 17) einander überlappen,
wobei die Kommunikation über das zweite Kommunikationssystem (12) nur in jenen Kanalressourcen (19) durchgeführt wird, die sich nicht mit den Schmalbandkanälen (14, 15) des ersten Kommunikationssystems (11) überlappen,
**dadurch gekennzeichnet, dass** eine der Kanalressourcen (19) des zweiten Kommunikationssystems (12), die sich nicht mit den Schmalbandkanälen (14, 15) des ersten Kommunikationssystems (11) überlappt, in einem Schmalband-LTE-Modus konfiguriert ist.

2. Verfahren nach Anspruch 1, **dadurch gekennzeichnet, dass** das erste Kommunikationssystem (11) gemäß dem GSM-R-Standard betrieben wird, während das zweite Kommunikationssystem (12) gemäß dem LTE-Standard betrieben wird.

3. Verfahren nach Anspruch 1 oder 2, **dadurch gekennzeichnet, dass** die Bandbreite (BW₁) des ersten Frequenzbandes (13) 4 MHz und die Bandbreite (BW₂) des zweiten Frequenzbandes (17) 5 MHz beträgt, wobei das erste Frequenzband (13) innerhalb des zweiten Frequenzbandes (17) liegt.

4. Verfahren nach einem der Ansprüche 1 bis 3, **dadurch gekennzeichnet, dass** die Überlappung der Frequenzbänder (13, 17) so gewählt wird, dass die Anzahl an Kanalressourcen (19) des zweiten Kommunikationssystems (12), die sich mit den Schmalbandkanälen (14, 15) des ersten Kommunikationssystems (11) überlappen, durch Auswählen der Frequenz des ersten oder bevorzugt des zweiten Frequenzbandes (13, 17) minimiert wird.

5. Verfahren nach einem der Ansprüche 1 bis 4, **dadurch gekennzeichnet, dass** eine Liste von Kanalressourcen (19), die sich mit den Schmalbandkanälen (14, 15) des ersten Kommunikationssystems (11) überlappen oder nicht überlappen, dem Benutzerterminal (4) bereitgestellt wird, um ein Sub-Set von verfügbaren Kanalressourcen (19) aufzubauen.

6. Verfahren nach einem der Ansprüche 1 bis 5, **dadurch gekennzeichnet, dass** die Kanalressourcen (19) des zweiten Kommunikationssystems (12), die sich nicht mit den Schmalbandkanälen (14, 15) des ersten Kommunikationssystems (11) überlappen, als ein LTE-System mit virtuell aneinander angrenzenden Kanalressourcen (19) rekonfiguriert werden.

7. Verfahren nach einem der Ansprüche 1 bis 6, **dadurch gekennzeichnet, dass** die Anzahl an Uplink-Allokations-Gewährungen in solchen Kanalressourcen (19), die aktiven Schmalbandkanälen (14) des ersten Kommunikationssystems (11) benachbart sind, durch den Knoten minimiert wird.

8. Verfahren nach einem der Ansprüche 1 bis 7, **dadurch gekennzeichnet, dass** der Knoten (2) an Benutzerterminals (4), die für den Uplink Kanalressourcen (19) für den Uplink mit einem starken Leistungspegel verwenden, Kanalressourcen (19) alloziert, die von aktiven Schmalbandkanälen (14) des ersten Kommunikationssystems (11) entfernt liegen.

9. Verfahren nach einem der Ansprüche 1 bis 8 in Verbindung mit Anspruch 2, **dadurch gekennzeichnet, dass** ein Enhanced Physical Downlink Control Channel (EPDCCH) und Demodulations-Referenz-Symbole (DM-RS) anstelle des Physical Downlink Control Channel (PDDTH) und regulärer Referenz-Symbole (RS) des LTE-Systems verwendet werden.

10. Knoten eines zellularen Netzwerkes, ausgelegt für die Kommunikation mit einem Benutzerterminal (4) mit Hilfe eines ersten und eines zweiten Kommunikationssystems (11, 12), die ein erstes bzw. ein zweites vorgegebenes Frequenzband (13, 17) haben,
wobei das erste Kommunikationssystem (11) zumindest zwei Schmalbandkanäle (14, 15) hat, die mit gegenseitigem Abstand (16) über das erste Frequenzband (13) verteilt sind, und
wobei das zweite Kommunikationssystem (12) einen Satz (18) von Kanalressourcen (19) hat, die aneinander angrenzend über das zweite Frequenzband (17) verteilt sind,
wobei das erste und das zweite Frequenzband (13, 17) einander überlappen,
wobei der Knoten (2) dafür konfiguriert ist, über das zweite Kommunikationssystem nur in jenen Kanalressourcen (19) zu kommunizieren, die sich nicht mit den Schmalbandkanälen (14, 15) des ersten Kommunikationssystems (11) überlappen,
**dadurch gekennzeichnet, dass** eine jener Kanalressourcen (19) des zweiten Kommunikationssystems (12), die sich nicht mit den Schmalbandkanälen (14, 15) des ersten Kommunikationssystems (11) überlappt, in einem Schmalband-LTE-Modus konfiguriert ist.

11. Knoten nach Anspruch 10, **dadurch gekennzeichnet, dass** das erste Kommunikationssystem (11) ein System gemäß dem GSM-R-Standard ist, während das zweite Kommunikationssystem (12) ein System gemäß dem LTE-Standard ist.

12. Knoten nach Anspruch 10 oder 11, **dadurch gekennzeichnet, dass** die Bandbreite (BW₁) des ersten Frequenzbandes (13) 4 MHz und die Bandbreite (BW₂) des zweiten Frequenzbandes (17) 5 MHz beträgt, wobei das erste Frequenzband (13) innerhalb des zweiten Frequenzbandes (17) liegt.

13. Knoten nach einem der Ansprüche 10 bis 12, **dadurch gekennzeichnet, dass** die Überlappung der Frequenzbänder (13, 17) so ist, das die Anzahl an Kanalressourcen (19) des zweiten Kommunikationssystems (12), die sich mit den Schmalbandkanälen (14, 15) des ersten Kommunikationssystems (11) überlappen, durch Auswählen der Frequenz des ersten oder bevorzugt des zweiten vorgegebenen Frequenzbandes (13, 17) minimiert wird.

## Revendications

1. Procédé de fonctionnement d'un premier et d'un second système de communication ayant respectivement une première et une seconde bande de fréquences (13, 17) prédéterminée, destiné à être utilisé pour la communication entre un terminal utilisateur (4) et un noeud (2) d'un réseau cellulaire (1),
dans lequel le premier système de communication (11) a au moins deux canaux à bande étroite (14, 15) qui sont distribués avec un espacement mutuel (16) sur la première bande de fréquences (13), et
dans lequel le second système de communication (12) a un ensemble (18) de ressources de canal (19) qui sont distribuées de manière contiguë sur la seconde bande de fréquences (17),
dans lequel la première et la seconde bande de fréquences (13, 17) se superposent, et
dans lequel la communication sur le second système de communication (12) est effectuée uniquement dans les ressources de canal (19) qui ne se superposent pas avec les canaux à bande étroite (14, 15) du premier système de communication (11),
**caractérisé en ce qu'**une des ressources de canal (19) du second système de communication (12) qui ne se superpose pas avec les canaux à bande étroite (14, 15) du premier système de communication (11) est configurée dans un mode LTE à bande étroite.

2. Procédé selon la revendication 1, **caractérisé en ce que** le premier système de communication (1) fonctionne selon le standard GSM-R, tandis que le second système de communication (12) fonctionne selon le standard LTE.

3. Procédé selon la revendication 1 ou 2, **caractérisé en ce que** la largeur de bande (BW₁) de la première bande de fréquences (13) est de 4 MHz et la largeur de bande (BW₂) de la seconde bande de fréquences (17) est de 5 MHz, où la première bande de fréquences (13) se situe à dans la seconde bande de fréquences (17).

4. Procédé selon l'une quelconque des revendications 1 à 3, **caractérisé en ce que** la superposition des bandes de fréquences (13, 17) est choisie de telle manière que le nombre de ressources de canal (19) du second système de communication (12) qui se superposent avec les canaux à bande étroite (14, 15) du premier système de communication (11) est minimisé par le choix en fréquence de la première ou de préférence de la seconde bande de fréquences (13, 17) prédéterminée.

5. Procédé selon l'une quelconque des revendications 1 à 4, **caractérisé en ce qu'**une liste des ressources de canal (19) qui se superposent ou ne se superposent pas avec les canaux à bande étroite (14, 15) du première système de communication (11) est rendue disponible pour le terminal utilisateur (4) pour élaborer un sous-ensemble de ressources de canal (19) disponibles.

6. Procédé selon l'une quelconque des revendications 1 à 5, **caractérisé en ce que** les ressources de canal (19) du second système de communication (12) qui ne se superposent pas avec les canaux à bande étroite (14, 15) du premier système de communication (11) sont reconfigurées en tant que système LTE avec des ressources de canal (19) virtuellement contiguës.

7. Procédé selon l'une quelconque des revendications 1 à 6, **caractérisé en ce que** le nombre d'octrois d'allocation en liaison montante dans des ressources de canal (19) adjacentes à des canaux à bande étroite (14) actifs du premier système de communication (11) est minimisé par le noeud.

8. Procédé selon l'une quelconque des revendications 1 à 7, **caractérisé en ce qu'**aux terminaux utilisateurs (4) utilisant des ressources de canal (19) pour une liaison montante avec un niveau de puissance élevé sont allouées des ressources de canal (19) éloignées des canaux à bande étroite (14) actifs du premier système de communication (11) par le noeud (2).

9. Procédé selon l'une quelconque des revendications 1 à 8 en combinaison avec la revendication 2, **caractérisé en ce qu'**un canal Enhanced Physical Downlink Control Channel (EPDCCH) et des symboles de référence de démodulation (DM-RS) sont employés à la place du canal Physical Downlink Control Channel (PDCCH) et des symboles de référence réguliers (RS) du système LTE.

10. Noeud d'un réseau cellulaire adapté pour la communication avec un terminal utilisateur (4) au moyen d'un premier et d'un second système de communication (11, 12) qui ont respectivement une première et une seconde bande de fréquences (13, 17) prédéterminée,
dans lequel le premier système de communication (11) a au moins deux canaux à bande étroite (14, 15) qui sont distribués avec un espacement mutuel (16) sur la première bande de fréquences (13), et
dans lequel le second système de communication (12) a un ensemble (18) de ressources de canal (19) qui sont distribuées de manière contiguë sur la seconde bande de fréquences (17),
dans lequel la première et la seconde bande de fréquences (13, 17) se superposent, et
où le noeud (2) est configuré pour communiquer sur le second système de communication uniquement dans les ressources de canal (19) qui ne se superposent pas avec les canaux à bande étroite (14, 15) du premier système de communication (11),
**caractérisé en ce qu'**une parmi cettes ressources de canal (19) du second système de communication (12) qui ne se superpose pas avec les canaux à bande étroite (14, 15) du premier système de communication (11) est configurée dans un mode LTE à bande étroite.

11. Noeud selon la revendication 10, **caractérisé en ce que** le premier système de communication (11) est un système selon le standard GSM-R, tandis que le second système de communication (12) est un système selon le standard LTE.

12. Noeud selon la revendication 10 ou 11, **caractérisé en ce que** la largeur de bande (BW₁) de la première bande de fréquences (13) est de 4 MHz et la largeur de bande (BW₂) de la seconde bande de fréquences (17) est de 5 MHz, la première bande de fréquences (13) se situant dans la seconde bande de fréquences (17).

13. Noeud selon l'une quelconque des revendications 10 à 12, **caractérisé en ce que** la superposition des bandes de fréquences (13, 17) est telle que le nombre de ressources de canal (19) du second système de communication (12) qui se superposent avec les canaux à bande étroites (14, 15) du premier système de communication (11) est minimisé par le choix en fréquence de la première ou de préférence de la seconde bande de fréquences (13, 17) prédéterminée.
